# EUROPEAN PATENT SPECIFICATION

(11) **EP 3 715 600 B1**
(45) Date of publication and mention of the grant of the patent: **29.03.2023**
(21) Application number: 18882173.0
(22) Date of filing: 22.11.2018
(51) Int. Cl.: F02B 25/04, F16C 7/02, F16C 7/04, F01B 31/14, F02B 75/32, F02D 15/02, F16C 7/06, F16J 7/00, F01B 9/02, F02B 75/04

(54) **VARIABLE COMPRESSION DEVICE AND ENGINE SYSTEM**
VORRICHTUNG MIT VARIABLER KOMPRESSION UND MOTORSYSTEM
DISPOSITIF DE COMPRESSION VARIABLE ET SYSTÈME DE MOTEUR

(30) Priority: 24.11.2017 JP 2017225617
(43) Date of publication of application: 30.09.2020
(73) Proprietor: IHI Corporation, Tokyo 135-8710 (JP)
(72) Inventor: MASUDA, Yutaka, Tokyo 135-8710 (JP); HIROSE, Takayuki, Tokyo 135-8710 (JP); YAMADA, Takayuki, Tokyo 135-8710 (JP); NAKAJIMA, Hayato, Tokyo 135-8710 (JP)
(74) Representative: TBK
(86) International application number: PCT/JP2018/043126
(87) International publication number: WO 2019/103085

(56) References cited:
- EP-A1- 3 098 416
- WO-A1-2015/108178
- CN-U- 204 436 933
- CN-Y- 2 554 669
- DE-A1-102015 203 387
- JP-A- H07 197 910
- JP-A- 2004 044 512

## Description

### [Technical Field]

The present disclosure relates to a variable compression device according to the preamble of claim 1 and an engine system comprising the variable compression device.

### [Background Art]

For example, Patent Document 1 describes a large reciprocating piston combustion engine having a crosshead. The large reciprocating piston combustion engine in Patent Document 1 is a dual fuel engine in which operation is possible using both a liquid fuel such as heavy oil and a gaseous fuel such as natural gas. In the large reciprocating piston combustion engine in Patent Document 1, an adjustment mechanism configured to change a compression ratio by moving a piston rod using a hydraulic pressure so that the large reciprocating piston combustion engine can handle both a compression ratio appropriate for operation using a liquid fuel and a compression ratio appropriate for operation using a gaseous fuel is provided in a crosshead part.

Patent Document 2 discloses a generic variable compression device according to the preamble of claim 1 and an engine system comprising the variable compression device.

### [Citation List]

### [Patent Document]

[Patent Document 1]
   JP 2014 020375 A
[Patent Document 2]
   EP 3 098 416 A1

### [Summary of Invention]

### [Technical Problem]

In an engine system according to Patent Document 1 having a compression adjustment device which changes the compression ratio as described above, the compression ratio is changed by supplying the hydraulic oil (the working fluid) to the hydraulic chamber (the fluid chamber) provided in the crosshead and moving up the piston rod disposed in the fluid chamber using the working fluid. However, in a case in which the piston rod is disposed on a bottom surface of a fluid chamber, when the working fluid is supplied to the fluid chamber, a small amount of the working fluid flows between the piston rod and the bottom surface of the fluid chamber and a pressure receiving area between the piston rod and the working fluid is small. For this reason, it may be difficult to move up the piston rod from the bottom surface of the fluid chamber in some cases. Therefore, it is necessary to ensure that there is always a pressure receiving area of hydraulic oil required for moving up the piston rod.

The present disclosure was made in view of the above-described problems, and an object of the present disclosure is to provide a variable compression device in which a piston rod can be moved using a working fluid even when the piston rod comes into contact with a bottom surface of a fluid chamber, and an engine system comprising the variable compression device.

The object is achieved by a variable compression device having the features of claim 1 and by an engine system according to claim 6. Further advantageous developments of the present invention are set out in the dependent claims.

The present invention adopts a variable compression device for a combustion engine including: a piston rod connected to a crosshead and a connecting rod; and a fluid chamber limited in one direction by a movable piston and into which a pressurized working fluid is supplied and in which the piston rod is caused to move in a direction away from the crosshead so that a compression ratio of the combustion engine increases, wherein a grooved flow path is formed in a bottom surface of the fluid chamber or a contact surface of the movable piston in contact with the bottom surface of the fluid chamber.

Preferably, a supply opening for the working fluid is formed in the bottom surface of the fluid chamber, and the grooved flow path is formed such that the grooved flow path and the supply opening overlap.

Preferably, a concave part is formed in the bottom surface or the contact surface further outward or inward in a radial direction of the piston rod than the grooved flow path.

Preferably, the grooved flow path is annular.

The present invention adopts an engine system including the above described variable compression device.

### [Advantageous Effects of Invention]

According to the present invention, it is possible to increase an area of a working fluid coming into contact with the piston rod by the working fluid flowing into the fluid chamber flowing into the grooved flow path. Thus, it is easy to move up the piston rod using the working fluid. Therefore, it is possible to move the piston rod in a direction in which a compression ratio increases even when the piston rod comes into contact with the bottom surface of the fluid chamber.

### [Brief Description of Drawings]

FIG. 1 is a cross-sectional view of an engine in an embodiment of the present disclosure.
FIG. 2 is a schematic cross-sectional view showing a part of the engine in the embodiment of the present disclosure.
FIG. 3 is a cross-sectional view taken along line A-A in Fig. 2.

### [Description of Embodiments]

An embodiment of a two-stroke engine in the present disclosure will be described below with reference to the drawings.

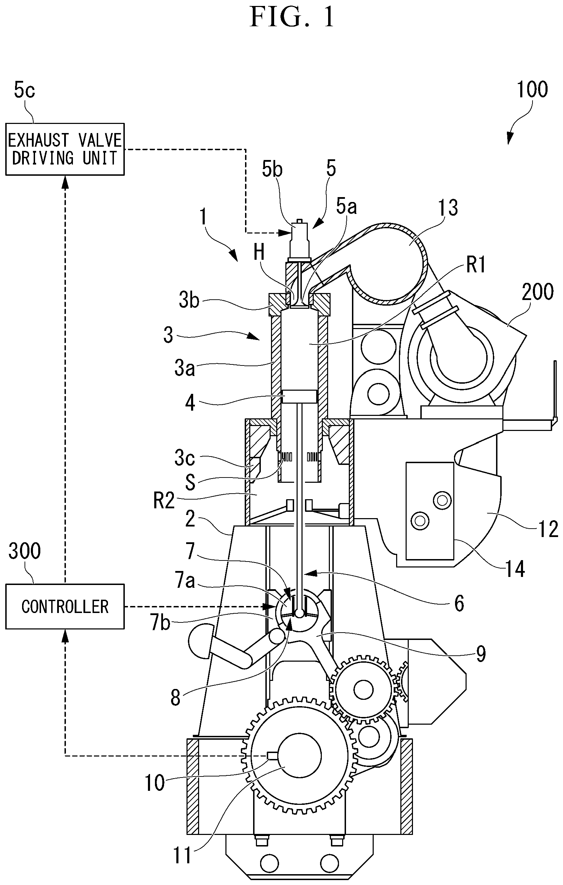

An engine system 100 in this embodiment is installed in, for example, ships such as large tanker, and as shown in FIG. 1, includes an engine 1, a supercharger 200, and a controller 300. In this embodiment, a case in which the engine 1 is used as a main unit, the supercharger 200 is used as an auxiliary unit, and the engine 1 (the main unit) and the supercharger 200 (the auxiliary unit) are provided as separate units will be described. Here, the supercharger 200 can be configured as a part of the engine 1.

The engine 1 is a multi-cylinder uniflow scavenging diesel engine and can work
in a gas operation mode in which a gaseous fuel such as natural gas and a liquid fuel such as heavy oil are combusted together and in a diesel operation mode in which a liquid fuel such as heavy oil is combusted. In the gas operation mode, only a gaseous fuel may be combusted. Such an engine 1 includes a frame 2, a cylinder unit 3, a piston 4, an exhaust valve unit 5, a piston rod 6, a crosshead 7, a hydraulic part 8, a connecting rod 9, a crank angle sensor 10, a crankshaft 11, a scavenging reservoir 12, an exhaust reservoir 13, and an air cooler 14. Furthermore, a cylinder is constituted of the cylinder unit 3, the piston 4, the exhaust valve unit 5, and the piston rod 6. In FIG. 1, a side on which the exhaust valve unit 5 is provided may be referred to as an upper side and a side on which the crankshaft 11 which will be described later is provided may be referred to as a lower side in some cases. A diagram when viewed in a center axis direction of the piston rod 6 may be referred to as a plan view in some cases.

The frame 2 is a strengthening member which supports the entire engine 1 and has the crosshead 7, the hydraulic part 8, and the connecting rod 9 accommodated therein. Furthermore, a crosshead pin 7a which will be described later of the crosshead 7 is provided to be able to reciprocate inside the frame 2.

The cylinder unit 3 includes a cylindrical cylinder liner 3a, a cylinder head 3b, and a cylinder jacket 3c. The cylinder liner 3a is a cylindrical member and has a sliding surface on which the piston 4 slides therein. A space surrounded by an inner circumferential surface of such a cylinder liner 3a and the piston 4 is defined as a combustion chamber R1. Furthermore, a plurality of scavenging ports S arranged in a circumferential direction are formed in a lower portion of the cylinder liner 3a. Each of the scavenging ports S includes an opening which opens in an inner circumferential surface and an outer circumferential surface of the cylinder liner 3a and communicate with a scavenging chamber R2 inside the cylinder jacket 3c and the inside of the cylinder liner 3a. The cylinder head 3b is a lid member and provided at an upper end portion of the cylinder liner 3a. The cylinder head 3b includes an exhaust port H formed at a central portion when viewed in a plan view and is connected to the exhaust reservoir 13. Furthermore, the cylinder head 3b has a fuel injection valve (not shown) provided therein. In addition, an in-cylinder pressure sensor (not shown) is provided in the vicinity of the fuel injection valve in the cylinder head 3b. The in-cylinder pressure sensor detects a pressure inside the combustion chamber R1 and transmits a signal concerning the pressure to the controller 300. The cylinder jacket 3c is a cylindrical member and includes the scavenging chamber R2 which is provided between the frame 2 and the cylinder liner 3a, into which a lower end portion of the cylinder liner 3a is inserted, and which is formed inside the cylinder jacket 3c. Furthermore, the scavenging chamber R2 of the cylinder jacket 3c is connected to the scavenging reservoir 12.

The piston 4 is a substantially columnar member, connected to the piston rod 6 which will be described later, and disposed inside the cylinder liner 3a. Furthermore, a gap between the piston 4 and the cylinder liner 3a is sealed using a piston ring (not shown) provided on the outer circumferential surface of the piston 4. The piston 4 slides inside the cylinder liner 3a with the piston rod 6 due to a change in pressure in the combustion chamber R1.

The exhaust valve unit 5 includes an exhaust valve 5a, an exhaust valve housing 5b, and an exhaust valve driving unit 5c. The exhaust valve 5a is provided inside the cylinder head 3b and closes the exhaust port H in the cylinder unit 3 using the exhaust valve driving unit 5c. The exhaust valve housing 5b is a cylindrical housing and has an end portion of the exhaust valve 5a away from the cylinder unit 3 accommodated therein. The exhaust valve driving unit 5c is an actuator by which the exhaust valve 5a is moved in a direction along a stroke direction of the piston 4.

The piston rod 6 is a long member and has one end portion connected to the piston 4 and the other end portion connected to the crosshead pin 7a. The other end portion of the piston rod 6 is inserted into the crosshead pin 7a and the connecting rod 9 is rotatably connected to the crosshead pin 7a. Furthermore, the piston rod 6 has a flange in which a diameter of a part of the other end portion thereof is larger than a diameter of the other end portion of the piston rod 6.

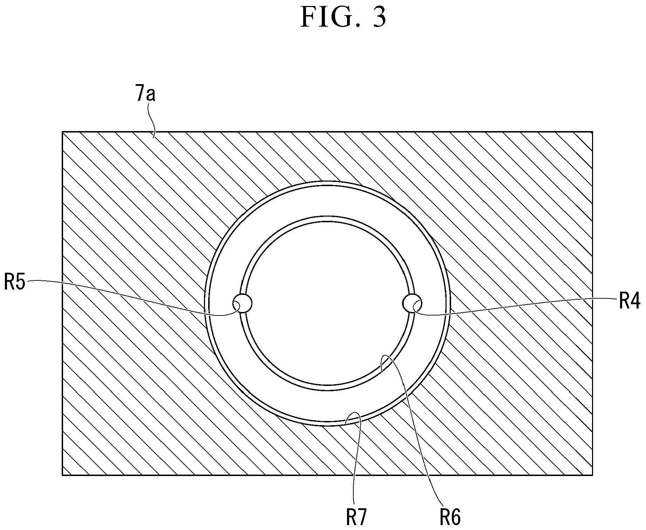

The crosshead 7 includes the crosshead pin 7a, a guide shoe 7b, and a lid member 7c. The crosshead pin 7a is a columnar member and movably connects the piston rod 6 to the connecting rod 9. The crosshead pin 7a has an insertion space into which the other end portion of the piston rod 6 is inserted. In this insertion space, the hydraulic chamber R3 (the fluid chamber) into/from which hydraulic oil (a working fluid) is supplied and discharged is formed between the insertion space and the flange of the piston rod 6. A lower surface of the flange in the piston rod 6 and a bottom surface of the insertion space which is the bottom surface of the hydraulic chamber R3 are parallel to each other. Furthermore, as shown in FIG. 3, in the crosshead pin 7a, an annular grooved flow path R6 and an annular concave part R7 formed outside the grooved flow path R6 in a radial direction thereof are provided in the bottom surface of the hydraulic chamber R3. The grooved flow path R6 is formed such that an opening of a supply flow path R4 and an opening of a relief flow path R5 which will be described later overlap when viewed in a plan view. The concave part R7 is formed in an annular shape in the bottom surface of the hydraulic chamber R3 along an outer edge thereof. An outlet port O passing through the crosshead pin 7a in an axial direction of the crosshead pin 7a is formed in the crosshead pin 7a below a center.

The outlet port O is an opening through which cooling oil (a lubricating fluid) which has passed through a cooling flow path (not shown) in the piston rod 6 flows and is discharged. Furthermore, the supply flow path R4 configured to connect the hydraulic chamber R3 to a plunger pump 8c which will be described later and the relief flow path R5 configured to connect the hydraulic chamber R3 to a relief valve 8f which will be described later are provided in the crosshead pin 7a.

The guide shoe 7b is a member which rotatably supports the crosshead pin 7a and moves on a guide rail (not shown) in the stroke direction of the piston 4 with the crosshead pin 7a. When the guide shoe 7b moves along the guide rail, a rotational motion of the crosshead pin 7a is restricted and movement of the crosshead pin 7a in a direction other than a linear direction along the stroke direction of the piston 4 is also restricted. The lid member 7c is an annular member, fixed to an upper portion of the crosshead pin 7a, and has the end portion of the piston rod 6 away from the cylinder unit 3 inserted thereinto. Such a crosshead 7 transmits the liner motion of the piston 4 to the connecting rod 9.

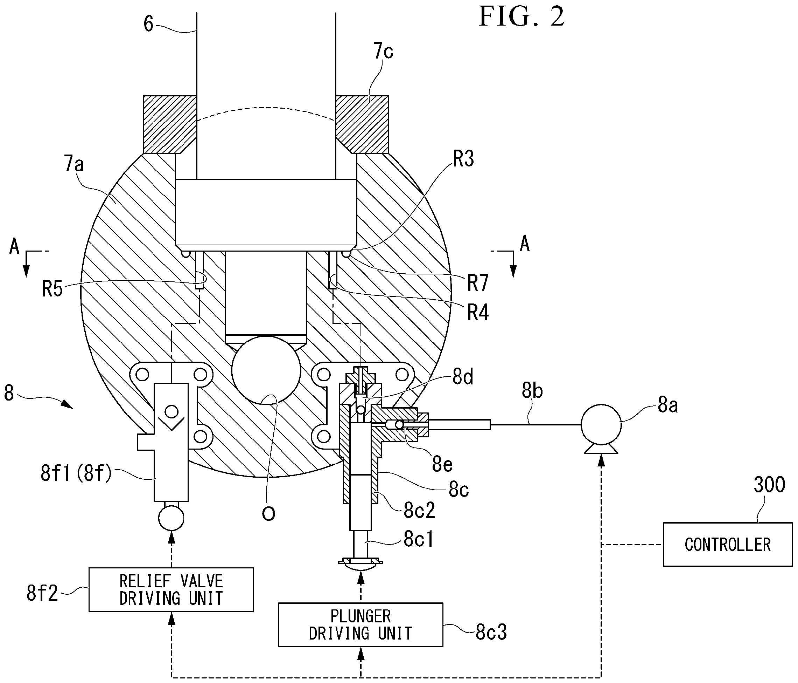

As shown in FIG. 2, the hydraulic part 8 includes a supply pump 8a, a swing pipe 8b, the plunger pump 8c, a first check valve 8d and a second check valve 8e included in the plunger pump 8c, and the relief valve 8f. Furthermore, the piston rod 6, the crosshead 7, the hydraulic part 8, and the controller 300 function as a variable compression device in the present disclosure.

The supply pump 8a is a pump which pressurizes hydraulic oil supplied from a hydraulic oil tank (not shown) on the basis of an instruction received from the controller 300 and supplies the pressurized hydraulic oil to the plunger pump 8c. The supply pump 8a is driven using electric power of a battery of a ship and can operate before a liquid fluid is supplied to the combustion chamber R1. The swing pipe 8b is a pipe through which the supply pump 8a is connected to the plunger pump 8c of each cylinder and is swingably provided between the plunger pump 8c which moves with the crosshead pin 7a and the supply pump 8a which is fixed and does not move.

The plunger pump 8c is fixed to the crosshead pin 7a and includes a rod-shaped plunger 8c1, a cylindrical cylinder 8c2 which slidably accommodates the plunger 8c1, and plunger driving unit 8c3. When the plunger 8c1 is connected to a driving unit (not shown), the plunger pump 8c slides in the cylinder 8c2 to pressurize hydraulic oil and supplies the pressurized hydraulic oil to the hydraulic chamber R3. Furthermore, the first check valve 8d is provided in an opening which is provided in an end portion of the cylinder 8c2 in the vicinity of the supply flow path R4 and through which hydraulic oil is discharged. In addition, the second check valve 8e is provided in an opening of the cylinder 8c2 which is provided in a side circumferential surface and through which hydraulic oil is suctioned. The plunger driving unit 8c3 is connected to the plunger 8c1 and causes the plunger 8c1 to reciprocate on the basis of an instruction received from the controller 300.

The first check valve 8d is configured to be closed when a valve body is pressed toward the inside of the cylinder 8c2 and prevents hydraulic oil supplied to the hydraulic chamber R3 from flowing back to the cylinder 8c2. Furthermore, if a pressure of hydraulic oil in the cylinder 8c2 is larger than a pressing force (a valve opening pressure) of a pressing member by which a valve body of the first check valve 8d is pressed, the first check valve 8d opens when the valve body is pushed by the hydraulic oil in the cylinder 8c2. The second check valve 8e is configured to be closed when the valve body is pressed toward the outside of the cylinder 8c2 and prevents hydraulic oil supplied to the cylinder 8c2 from flowing back to the supply pump 8a. Furthermore, if a pressure of hydraulic oil supplied from the supply pump 8a is larger than the pressing force (the valve opening pressure) of the pressing member by which the valve body of the second check valve 8e is pressed, the second check valve 8e opens when the valve body is pushed by the hydraulic oil supplied from the supply pump 8a. The first check valve 8d has a valve opening pressure higher than a valve opening pressure of the second check valve 8e. For this reason, during a steady operation in which the engine system operates at a preset compression ratio, the valve does not open due to the pressure of the hydraulic oil supplied from the supply pump 8a.

The relief valve 8f is provided in the crosshead pin 7a and includes a main body part 8f1 and a relief valve driving unit 8f2. The main body part 8f1 is a valve body which is connected to the hydraulic chamber R3 and a hydraulic oil tank (not shown). The relief valve driving unit 8f2 is connected to the main body part 8f1 and opens and closes the main body part 8f1 on the basis of an instruction received from the controller 300. The relief valve 8f opens using the relief valve driving unit 8f2, and thus hydraulic oil stored in the hydraulic chamber R3 returns to the hydraulic oil tank.

As shown in FIG. 1, the connecting rod 9 is a long member and has one end portion connected to the crosshead pin 7a and the other end portion connected to the crankshaft 11. The connecting rod 9 configured to convert a linear motion of the piston 4 transmitted to the crosshead pin 7a into a rotational motion. The crank angle sensor 10 is a sensor configured to measure a crank angle of the crankshaft 11 and transmits a crank pulse signal for calculating the crank angle to the controller 300.

The crankshaft 11 is a long member, connected to the connecting rod 9 provided in each cylinder, and rotates due to the rotational motion transmitted through the connecting rod 9. Thus, for example, power is transmitted to a screw or the like. The scavenging reservoir 12 is provided between the cylinder jacket 3c and the supercharger 200 and air pressurized using the supercharger 200 flows into the scavenging reservoir 12. Furthermore, the scavenging reservoir 12 has the air cooler 14 provided therein. The exhaust reservoir 13 is a tubular member, connected to the exhaust port H of each cylinder, and connected to the supercharger 200. When a gas discharged through the exhaust port H is temporarily stored in the exhaust reservoir 13, the gas is supplied to the supercharger 200 in a state in which pulsation is suppressed. The air cooler 14 cools air inside the scavenging reservoir 12.

The supercharger 200 pressurizes air suctioned through an air intake port (not shown) using a turbine rotated by the gas discharged through the exhaust port H and supplies the pressurized air to the combustion chamber R1 through the scavenging ports S.

The controller 300 is a computer configured to control an amount of fuel to be supplied and the like on the basis of a ship operator's operation or the like. Furthermore, the controller 300 changes a compression ratio in the combustion chamber R1 by controlling the hydraulic part 8. To be specific, the controller 300 controls the plunger pump 8c, the supply pump 8a, and the relief valve 8f to adjust an amount of hydraulic oil in the hydraulic chamber R3. Thus, the compression ratio is changed by changing a position of the piston rod 6.

In such an engine system 100, the piston 4 slides in the cylinder liner 3a by igniting and exploding a fuel injected into the combustion chamber R1 through the fuel injection valve (not shown), and thus the crankshaft 11 rotates. Specifically, the fuel supplied to the combustion chamber R1 is mixed with the pressurized air flowing in through the scavenging ports S and then the piston 4 moves in a direction in which the piston 4 is directed toward a top dead center among stroke directions and thus the fuel is pressurized, a temperature of the fuel increases, and the fuel ignites spontaneously. Furthermore, when a fuel is a liquid fuel, in the combustion chamber R1, a temperature of the liquid fuel increases, the liquid fuel evaporates, and the liquid fuel ignites spontaneously.

Also, when the fuel in the combustion chamber R1 ignites spontaneously and expands rapidly, a pressure is applied to the piston 4 in a direction in which the piston 4 is directed toward a bottom dead center among the stroke directions. Thus, the piston 4 moves in the direction in which the piston 4 is directed toward the bottom dead center with the piston rod 6 and the crankshaft 11 rotates with the connecting rod 9 therebetween. Furthermore, when the piston 4 moves toward the bottom dead center, the pressurized air flows into the combustion chamber R1 through the scavenging ports S. When the exhaust valve unit 5 is driven, the exhaust port H opens. Thus, an exhaust gas in the combustion chamber R1 is pushed out into the exhaust reservoir 13 through the exhaust port H using the pressurized air.

When a compression ratio is intended to increase, the supply pump 8a is driven using the controller 300 and hydraulic oil is supplied to the plunger pump 8c using the supply pump 8a. Furthermore, the plunger pump 8c is driven using the controller 300, the hydraulic oil is pressurized until the hydraulic oil has a pressure in which the piston rod 6 can move up using the plunger pump 8c, and the hydraulic oil is supplied to the hydraulic chamber R3. At this time, the hydraulic oil flowing into the supply flow path R4 flows into the grooved flow path R6 provided such that the grooved flow path R6 and an opening (a supply opening) in the supply flow path R4 in the vicinity of the hydraulic chamber R3 overlap when viewed in a plan view. In addition, the flange of the piston rod 6 moves up from the bottom surface of the hydraulic chamber R3 due to the pressure of the hydraulic oil flowing into the grooved flow path R6 formed in the bottom surface of the hydraulic chamber R3 and the hydraulic oil further flows into a gap between the moved-up flange and the bottom surface of the hydraulic chamber R3. Thus, the piston rod 6 moves upward and the top dead center of the piston 4 moves upward (that is, in the vicinity of the exhaust port H).

When the compression ratio is intended to decrease, the hydraulic chamber R3 is connected to the hydraulic oil tank (not shown) by driving the relief valve 8f using the controller 300 and opening the relief valve 8f. Furthermore, a load of the piston rod 6 is applied to the hydraulic oil of the hydraulic chamber R3 and the hydraulic oil in the hydraulic chamber R3 is pushed out into the hydraulic oil tank through the relief valve 8f. Thus, the hydraulic oil in the hydraulic chamber R3 decreases, the piston rod 6 moves downward (that is, in the vicinity of the crankshaft 11), and the top dead center of the piston 4 moves downward.

According to this embodiment, it is possible to increase an area of the hydraulic oil coming into contact with the flange of the piston rod 6 by flowing the hydraulic oil flowing into the supply flow path R4 into the grooved flow path R6. Thus, it is easy to move up the piston rod 6 using the hydraulic oil and it is easy to move the piston rod 6 in a direction in which the compression ratio increases. Furthermore, when the hydraulic oil is discharged from the hydraulic chamber R3, it is possible to guide the hydraulic oil to an opening (a discharge opening) of the relief flow path R5 in the vicinity of the hydraulic chamber R3 through the grooved flow path R6 and it is possible to discharge the hydraulic oil from the hydraulic chamber R3 more quickly.

Also, it is easy to guide the hydraulic oil flowing into the hydraulic chamber R3 through the supply flow path R4 to the grooved flow path R6 by providing the grooved flow path R6 such that the grooved flow path R6 and an opening (a supply opening) of the supply flow path R4 in the vicinity of the hydraulic chamber R3 overlap when viewed in a plan view. Therefore, it is easier to move up the piston rod 6 using the hydraulic oil and it is possible to improve responsiveness at the time of increasing the compression ratio.

Furthermore, according to this embodiment, air or hydraulic oil is stored in the concave part R7 in advance by forming the concave part R7 on the outside of the grooved flow path R6. Thus, when the compression ratio is low (when the compression ratio is small), the flange of the piston rod 6 and the bottom surface of the hydraulic chamber R3 are prevented from coming into close contact with each other. Therefore, when the piston rod 6 is caused to move in a direction in which the compression ratio further increases (in a direction in which the compression ratio increases), it is possible to smoothly move the flange of the piston rod 6 away from the bottom surface of the hydraulic chamber R3 without attaching the flange of the piston rod 6 to the bottom surface of the hydraulic chamber R3.

In addition, according to this embodiment, the hydraulic oil supplied from the supply flow path R4 to the hydraulic chamber R3 spreads in the circumferential direction by forming the grooved flow path R6 in an annular shape. Thus, it is possible to quickly guide the hydraulic oil supplied from the supply flow path R4 to the hydraulic chamber R3 to a wide area.

Although the preferred embodiments of the present disclosure have been described above with reference to the drawings, the present disclosure is not limited to the above-described embodiments. The shapes, combinations, and the like of the constituent members shown in the above-described embodiments are merely examples and can be variously changed on the basis of design requirements and the like without departing from the gist of the present disclosure.

Although the grooved flow path R6 is formed in an annular shape in the above-described embodiments, the present disclosure is not limited thereto. The grooved flow path R6 may be formed, for example, in a lattice shape. In this case, since a surface area of the grooved flow path R6 can be further increased, it is possible to more efficiently and rapidly guide the hydraulic oil to a wide area.

The grooved flow path R6 may be formed, for example, in a spiral shape. Also in this case, since the surface area of the grooved flow path R6 can be further increased, it is possible to more efficiently and rapidly guide the hydraulic oil to a wide area.

Furthermore, although the concave part R7 is formed in an annular shape in the above-described embodiments, the present disclosure is not limited thereto. The concave part R7 may be, for example, a plurality of recesses formed at equal intervals in the bottom surface of the hydraulic chamber R3 along the outer edge thereof. Also in this case, adhesion of the flange of the piston rod 6 can be prevented as in the above-described embodiments. The concave part R7 may not be formed in the bottom surface of the hydraulic chamber R3 and may be formed, for example, in a surface of the flange of the piston rod 6. In addition, the concave part R7 may be formed inside the grooved flow path R6.

Also, although the grooved flow path R6 is formed in the hydraulic chamber R3 in the above-described embodiments, the present disclosure is not limited thereto. The grooved flow path may be formed in the lower surface of the flange of the piston rod 6 (a contact surface thereof coming into contact with the bottom surface of the hydraulic chamber R3). Also in this case, the grooved flow path is formed such that the grooved flow path, the opening of the supply flow path R4, and the opening of the relief flow path R5 overlap when viewed in a plan view. Here, in this case, since the grooved flow path can be formed by performing processing on the piston rod 6, it is easy to perform the processing.

### [Industrial Applicability]

According to the present disclosure, it is possible to increase an area of a working fluid which has flowed into a fluid chamber coming into contact with a piston rod by flowing the working fluid into a grooved flow path. Thus, it is easy to move up the piston rod using a working fluid. Therefore, it is possible to move the piston rod in a direction in which a compression ratio increases even in a state in which the piston rod has come into contact with a bottom surface of a fluid chamber.

### [Reference Signs List]

1 Engine
2 Frame
3 Cylinder unit
3a Cylinder liner
3b Cylinder head
3 c Cylinder jacket
4 Piston
5 Exhaust valve unit
5a Exhaust valve
5b Exhaust valve housing
5c Exhaust valve driving unit
6 Piston rod
7 Crosshead
7a Crosshead pin
7b Guide shoe
7c Lid member
8 Hydraulic part
8a Supply pump
8b Swing pipe
8c Plunger pump
8c1 Plunger
8c2 Cylinder
8c3 Plunger driving unit
8d First check valve
8e Second check valve
8f Relief valve
8f1 Main body part
8f2 Relief valve driving unit
9 Connecting rod
10 Crank angle sensor
11 Crankshaft
12 Scavenging reservoir
13 Exhaust reservoir
14 Air cooler
100 Engine system
200 Supercharger
300 Controller
H Exhaust port
O Outlet port
R1 Combustion chamber
R2 Scavenging chamber
R3 Hydraulic chamber
R4 Supply flow path
R5 Relief flow path
R6 Grooved flow path
R7 Concave part
S Scavenging port

## Claims

1. A variable compression device (6, 7, 8, 300) for a combustion engine (1) comprising:
a piston rod (6) connected to a crosshead (7) and a connecting rod (9); and
a fluid chamber (R3) limited in one direction by a movable piston and in which, when a pressurized working fluid is supplied thereinto, the piston rod (6) is caused to move in a direction away from the crosshead (7) so that a compression ratio of the combustion engine (1) increases, **characterized in that**
a grooved flow path (R6) is formed in a bottom surface of the fluid chamber (R3) or a contact surface of the movable piston in contact with the bottom surface of the fluid chamber (R3).

2. The variable compression device (6, 7, 8, 300) according to claim 1, wherein a supply opening for the working fluid is formed in the bottom surface, and
the grooved flow path (R6) is formed such that the grooved flow path (R6) and the supply opening overlap.

3. The variable compression device (6, 7, 8, 300) according to claim 2, wherein a concave part (R7) is formed in the bottom surface or the contact surface further outward in a radial direction of the piston rod (6) than the grooved flow path (R6).

4. The variable compression device (6, 7, 8, 300) according to claim 2, wherein a concave part (R7) is formed in the bottom surface or the contact surface further inward in a radial direction of the piston rod (6) than the grooved flow path (R6).

5. The variable compression device (6, 7, 8, 300) according to any one of claims 1 to 4, wherein the grooved flow path (R6) is annular.

6. An engine system (100), comprising:
the variable compression device (6, 7, 8, 300) according to any one of claims 1 to 5.

## Patentansprüche

1. Variable Kompressionsvorrichtung (6, 7, 8, 300) für eine Verbrennungsmaschine (1) mit:
einer Kolbenstange (6), die mit einem Kreuzkopf (7) und einer Verbindungsstange (9) verbunden ist; und
einer Fluidkammer (R3), die in einer Richtung durch einen beweglichen Kolben begrenzt ist und in der, wenn ein mit Druck beaufschlagtes Arbeitsfluid in diese zugeführt wird, eine Bewegung der Kolbenstange (6) in einer Richtung weg von dem Kreuzkopf (7) bewirkt wird, sodass sich ein Kompressionsverhältnis der Verbrennungsmaschine (1) erhöht,
**dadurch gekennzeichnet, dass**
ein genuteter Strömungspfad (R6) in einer Bodenfläche der Fluidkammer (R3) oder einer Kontaktfläche des beweglichen Kolbens, die mit der Bodenfläche der Fluidkammer (R3) in Kontakt ist, ausgebildet ist.

2. Variable Kompressionsvorrichtung (6, 7, 8, 300) nach Anspruch 1, wobei eine Zufuhröffnung für das Arbeitsfluid in der Bodenfläche ausgebildet ist, und
der genutete Strömungspfad (R6) derart ausgebildet ist, dass sich der genutete Strömungspfad (R6) und die Zufuhröffnung überlappen.

3. Variable Kompressionsvorrichtung (6, 7, 8, 300) nach Anspruch 2, wobei ein konkaver Teil (R7) in der Bodenfläche oder der Kontaktfläche weiter außen in einer Radialrichtung der Kolbenstange (6) als der genutete Strömungspfad (R6) ausgebildet ist.

4. Variable Kompressionsvorrichtung (6, 7, 8, 300) nach Anspruch 2, wobei ein konkaver Teil (R7) in der Bodenfläche oder der Kontaktfläche weiter innen in einer Radialrichtung der Kolbenstange (6) als der genutete Strömungspfad (R6) ausgebildet ist.

5. Variable Kompressionsvorrichtung (6, 7, 8, 300) nach einem der Ansprüche 1 bis 4, wobei der genutete Strömungspfad (R6) ringförmig ist.

6. Maschinensystem (100) mit:
der variablen Kompressionsvorrichtung (6, 7, 8, 300) nach einem der Ansprüche 1 bis 5.

## Revendications

1. Dispositif de compression variable (6, 7, 8, 300) pour moteur à combustion (1) comprenant :
une tige de piston (6) reliée à une crosse (7) et à une bielle (9) ; et
une chambre de fluide (R3) limitée dans une direction par un piston mobile et dans laquelle, lorsqu'un fluide de travail sous pression est fourni en son sein, la tige de piston (6) est amenée à se déplacer dans une direction à l'opposé de la crosse (7) de sorte qu'un taux de compression du moteur à combustion (1) augmente, **caractérisé en ce que**
un trajet d'écoulement rainuré (R6) est formé dans une surface inférieure de la chambre de fluide (R3) ou une surface de contact du piston mobile en contact avec la surface inférieure de la chambre de fluide (R3).

2. Dispositif de compression variable (6, 7, 8, 300) selon la revendication 1, une ouverture d'alimentation pour le fluide de travail étant formée dans la surface inférieure, et
le trajet d'écoulement rainuré (R6) étant formé de sorte que le trajet d'écoulement rainuré (R6) et l'ouverture d'alimentation se chevauchent.

3. Dispositif de compression variable (6, 7, 8, 300) selon la revendication 2, une partie concave (R7) étant formée dans la surface inférieure ou la surface de contact plus à l'extérieur dans une direction radiale de la tige de piston (6) que le trajet d'écoulement rainuré (R6).

4. Dispositif de compression variable (6, 7, 8, 300) selon la revendication 2, une partie concave (R7) étant formée dans la surface inférieure ou la surface de contact plus à l'intérieur dans une direction radiale de la tige de piston (6) que le trajet d'écoulement rainuré (R6).

5. Dispositif de compression variable (6, 7, 8, 300) selon l'une quelconque des revendications 1 à 4, le trajet d'écoulement rainuré (R6) étant annulaire.

6. Système de moteur (100), comprenant :
le dispositif de compression variable (6, 7, 8, 300) selon l'une quelconque des revendications 1 à 5.
